# EUROPÄISCHE PATENTSCHRIFT

(11) **EP 0 521 938 B1**
(45) Veröffentlichungstag und Bekanntmachung des Hinweises auf die Patenterteilung: **08.11.1995**
(21) Anmeldenummer: 91906406.3
(22) Anmeldetag: 27.03.1991
(51) Int. Cl.: A47J 45/06, A47J 37/10

(54) **PFANNE AUS STAHL**
STEEL PAN
POELE EN ACIER

(30) Priorität: 28.03.1990 DE 9003593 U
(43) Veröffentlichungstag der Anmeldung: 13.01.1993
(73) Patentinhaber: GAYDOUL, Annegret, D-64625 Bensheim (DE)
(72) Erfinder: GAYDOUL, Annegret, D-64625 Bensheim (DE)
(74) Vertreter: Gornott, Dietmar, Dipl.-Ing.
(86) Internationale Anmeldenummer: DE9100272
(87) Internationale Veröffentlichungsnummer: WO9114390

(56) Entgegenhaltungen:
- CH-A- 359 524
- DE-B- 1 193 654
- DE-C- 656 560
- GB-A- 16 493
- GB-A- 28 527

## Beschreibung

Die Erfindung betrifft eine Pfanne aus Stahl, insbesondere aus geschmiedetem Stahl, mit einem Stiel.

### Stand der Technik

Bei bekannten Pfannen ist im allgemeinen ein recht langer Pfannenstiel vorgesehen. Dieses ist insbesondere bei Pfannen aus geschmiedetem Stahl, die mit einem Stiel aus dem gleichen Werkstoff versehen sind, wichtig, damit die nicht mit einer zusätzlichen Wärmeisolierung versehene Griffzone nicht zu heiß wird. Die langen Stiele weisen jedoch verschiedene Nachteile auf. So ergeben sich beispielsweise beim Hantieren mit der Pfanne und beim Verstauen der Pfanne in einem Schrank Schwierigkeiten. Außerdem stellen die weit über die Pfanne hinausragenden Stiele eine Unfallgefahr dar. Schließlich ist es nicht möglich, eine derartige Pfanne in einen Backofen eines Haushaltsherdes zu Zwecken des Überbackens zu stellen.

Es ist zwar durch GB 28,527 bereits eine Pfanne bekannt, bei welcher ein Bügel, der an seinem Ende eine Öse zum Aufhängen der Pfanne über dem Feuer trägt, vom Pfannenrand ausgehend zunächst im wesentlichen nach oben verläuft und dann bis zur senkrechten Achse der Pfanne gebogen ist. Dieser Bügel ist jedoch bereits aus Platzgründen nicht für eine Pfanne verwendbar, wenn diese nicht speziell zum Aufhängen über dem Feuer vorgesehen ist.

Ferner ist aus GB 16,493 eine Pfanne mit einem ähnlich gebogenen Bügel bekannt, bei welchem das Griffteil etwa mittig über der Pfanne liegt und einen Schild als Spritzschutz trägt. Diese Pfanne erfordert einen relativ großen Abstand zwischen dem Pfannenboden und dem Griff, damit der Schild beim Befüllen der Pfanne sowie beim Braten den Zugang zur Pfanne nicht behindert. Aus diesem Grund benötigt diese bekannte Pfanne einen erheblichen Stauraum.

### Darstellung der Erfindung

Aufgabe der vorliegenden Erfindung ist es, eine Pfanne aus geschmiedetem Stahl anzugeben, welche die vorgenannten Nachteile nicht aufweist.

Die erfindungsgemäße Pfanne ist dadurch gekennzeichnet, daß der Stiel etwa in halber Länge zurückgebogen ist und daß der zurückgebogene Teil des Stiels einen oberhalb des nicht zurückgebogenen Teils im wesentlichen außerhalb des Pfannenrandes liegenden Griff bildet.

Die erfindungsgemäße Pfanne hat gegenüber bekannten Pfannen den Vorteil, daß sie leichter handhabbar und weniger sperrig ist und sich deshalb leicht verstauen läßt. Ferner ragt der Stiel kaum über den Rand des Herdes, wodurch die Unfallgefahr wesentlich vermindert ist. Trotzdem wird der Griff durch die für das Braten notwendige Hitze nicht unzulässig erwärmt, da die für die Wärmeleitung maßgebliche Stiellänge derjenigen der üblichen Pfanne entspricht - im Bedarfsfall sogar größer sein kann. Die niedrige Temperatur des Griffs ergibt sich insbesondere durch eine Weiterbildung, bei der vorgesehen ist, daß der Griff in Richtung auf die Pfanne offen ist.

Eine andere Weiterbildung besteht darin, daß das freie Ende des Griffs sich etwa über dem Pfannenrand befindet. Hierdurch wird einerseits die Gefahr von Verbrennungen durch aufsteigenden Dampf oder Fettspritzer vermindert und andererseits die Handhabbarkeit der erfindungsgemäßen Pfanne durch eine günstige Gewichtsverteilung weiter verbessert.

Gemäß einer anderen Weiterbildung ist vorgesehen, daß der Griff etwa parallel zum Pfannenboden verläuft. Hierdurch wird eine relativ geringe Höhe der Pfanne einschließlich des Griffs erreicht.

Demgegenüber ist gemäß einer anderen Weiterbildung vorgesehen, daß der Griff nach innen ansteigend verläuft. Diese Form ist an die normale Handhaltung angepaßt und somit ergonomisch noch günstiger. Darüber hinaus trägt ein derartiger Griff dazu bei, daß die mit der Pfanne hantierende Person gerade und weiter von der Wärmequelle entfernt steht.

Bei einer vorteilhaften Ausführungsform ist vorgesehen, daß der Griff doppelt ausgeführt ist. Außerdem kann an der dem Stiel gegenüber liegenden Seite ein geschlossener Henkel angebracht sein. Dieses ist besonders vorteilhaft bei größeren Pfannen, beispielsweise bei solchen mit einem Durchmesser ab 28 cm.

### Kurze Beschreibung der Zeichnung

Zwei Ausführungsbeispiele der Erfindung sind in der Zeichnung anhand mehrerer Figuren dargestellt und in der nachfolgenden Beschreibung näher erläutert. Es zeigt:
- Fig. 1: ein Ausführungsbeispiel mit einem etwa waagerechten Griff,
- Fig. 2: ein Ausführungsbeispiel mit einem nach innen ansteigenden Griff und
- Fig. 3: ein Ausführungsbeispiel mit einem zusätzlichen Henkel an der dem Stiel gegenüber liegenden Seite der Pfanne.

Gleiche Teile sind in den Figuren mit gleichen Bezugszeichen versehen.

### Wege zur Ausführung der Erfindung

Die Ausführungsbeispiele weisen jeweils in an sich bekannter Weise einen Boden 1 und einen Rand 2 auf. Ein starr an den Rand angesetzter Stiel 3 besteht wie die übrigen Teile der Pfanne aus Stahl und ist etwa auf halber Länge zu einem Griff 4, 4' zurückgebogen. Im Endbereich des Griffs ist eine Öse 5 vorgesehen. Letztere verringert die Unfallgefahr durch den ansonsten relativ spitz zulaufenden Griff.

Das Ende des Griffs 4, 4' befindet sich etwa über dem Pfannenrand. Es ergibt sich durch die erfindungsgemäße Gestaltung des Griffs eine leichte Handhabharkeit, da bei der erfindungsgemäßen Pfanne das Gewicht mit einem wesentlich kleineren Hebelarm beim Halten der Pfanne wirksam ist als bei der bekannten Pfanne mit einem gestreckten Stiel, der wegen der hohen Temperaturen der Pfanne am äußersten Ende angefaßt wird. Zwischen dem nicht gebogenen Teil des Stiels 3 und dem Griff 4, 4' ist genügend Platz, damit die Finger beim Ergreifen des Griffs 4 nicht versehentlich den heißen Teil des Stiels 3 berühren.

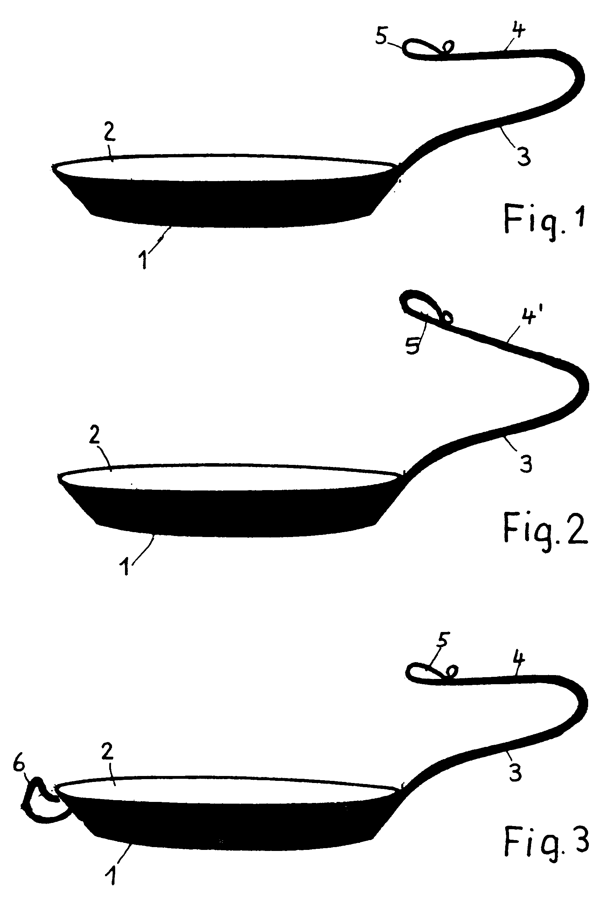

Während bei dem Ausführungsbeispiel nach Fig. 1 der Griff etwa waagerecht verläuft, steigt der Griff 4' beim Ausführungsbeispiel nach Fig. 2 nach innen an. Diese Richtung kommt der Haltung einer den Griff erfassenden Hand entgegen, so daß ein Hantieren mit dieser Pfanne erleichtert wird. Außerdem wird die mit der Pfanne hantierende Person nicht dazu verleitet, sich über die Pfanne zu beugen.

Bei dem Ausführungsbeispiel nach Fig. 3 ist an der dem Stiel 3 gegenüber liegenden Seite ein Henkel 6 vorgesehen, damit die Pfanne mit beiden Händen ergriffen werden kann. Selbstverständlich kann ein derartiger Henkel auch bei einer Pfanne nach Fig. 2 angeordnet sein.

Wie aus den Figuren ohne weiteres ersichtlich ist, ist der Abstand zwischen der Pfanne bzw. dem Rand und dem Griff 4 genügend groß, damit eine Verbrennungsgefahr durch Berührung des Stiels 3 ausgeschlossen werden kann. Dadurch, daß der zurückgebogene Griff 4 etwa über dem Rand 2 endet, kann auch eine Verbrennungsgefahr durch Dämpfe und Spritzer weitgehend ausgeschlossen werden. Der Überstand des zurückgebogenen Stiels ist derart klein, daß er bei herkömmlichen Herden kaum über den Rand des Herdes hinaussteht. Somit ist die Gefahr eines versehentlichen Herunterreißens - insbesondere durch Kinder - ebenfalls verringert.

Das bei dem dargestellten Ausführungsbeispiel als Öse geformte Ende kann auch parallel über die Länge des Griffs 4 verlaufend gebogen sein, so daß sich ein doppelter Griff ergibt.

## Patentansprüche

1. Pfanne aus Stahl, insbesondere aus geschmiedetem Stahl, mit einem Stiel, dadurch gekennzeichnet, daß der Stiel (3) etwa in halber Länge zurückgebogen ist und daß der zurückgebogene Teil des Stiels einen oberhalb des nicht zurückgebogenen Teils im wesentlichen ebenfalls außerhalb des Pfannenrandes liegenden Griff (4, 4') bildet.

2. Pfanne nach Anspruch 1, dadurch gekennzeichnet, daß der Griff (4, 4') in Richtung auf die Pfanne offen ist.

3. Pfanne nach Anspruch 2, dadurch gekennzeichnet, daß das freie Ende des Griffs (4, 4') sich etwa über dem Pfannenrand (2) befindet.

4. Pfanne nach einem der vorhergehenden Ansprüche, dadurch gekennzeichnet, daß der Griff (4) etwa parallel zum Pfannenboden (1) verläuft.

5. Pfanne nach einem der vorhergehenden Ansprüche 1 bis 3, dadurch gekennzeichnet, daß der Griff (4') nach innen ansteigend verläuft.

6. Pfanne nach einem der vorhergehenden Ansprüche, dadurch gekennzeichnet, daß der Griff doppelt ausgeführt ist.

7. Pfanne nach einem der vorhergehenden Ansprüche, dadurch gekennzeichnet, daß an der dem Stiel (3) gegenüber liegenden Seite ein geschlossener Henkel (6) angebracht ist.

## Claims

1. Pan made of steel, in particular of wrought steel, comprising a stalk, characterized in that the stalk (3) is bent backwards over approximately half its length and that the backwards bent portion of the stalk forms a pan handle (4, 4') located above that portion of the stalk which is not bent backwards and essentially also outside the pan edge.

2. Pan as claimed in claim 1, characterized in that the pan handle (4, 4') is open toward the pan.

3. Pan as claimed in claim 2, characterized in that the free end of the pan handle (4, 4') is located approximately above the pan edge (2).

4. Pan as claimed in any of the aforesaid claims, characterized in that the pan handle (4) is approximately parallel to the bottom (1) of the pan.

5. Pan as claimed in any of the aforesaid claims 1 to 3, characterized in that the pan handle (4') has a sloping shape and is directed toward the inside.

6. Pan as claimed in any of the aforesaid claims, characterized in that the handle is provided twice.

7. Pan as claimed in any of the aforesaid claims, characterized in that a closed handle (6) is provided on the side opposite to the stalk (3).

## Revendications

1. Poêle en acier, particulièrement en acier forgé, comprenant une queue, caractérisée en ce qu'environ la moitié de la queue (3) est recourbée et que la partie recourbée de la queue forme une poignée (4, 4') qui se trouve au-dessus de la partie non recourbée et essentiellement aussi à l'extérieur du bord de la poêle.

2. Poêle suivant la revendication 1, caractérisée en ce que la poignée (4, 4') est ouverte en direction de la poêle.

3. Poêle suivant la revendication 2, caractérisée en ce que l'extrémité libre de la poignée (4, 4') se trouve environ au-dessus du bord de la poêle (2).

4. Poêle suivant quelconque des revendications précédentes, caractérisée en ce que la poignée (4) prend un cours environ parallèle par rapport au fond (1) de la poêle.

5. Poêle suivant quelconque des revendications précédentes 1 à 3, caractérisée en ce que la poignée (4') prend un cours montant vers l'intérieur.

6. Poêle suivant quelconque des revendications précédentes, caractérisée en ce que la poignée existe deux fois.

7. Poêle suivant quelconque des revendications précédentes, caractérisée en ce qu'une anse fermée (6) est pourvue sur le côté opposé à la queue (3).
